# EUROPÄISCHE PATENTSCHRIFT

(11) **EP 2 316 582 B1**
(45) Veröffentlichungstag und Bekanntmachung des Hinweises auf die Patenterteilung: **22.01.2014**
(21) Anmeldenummer: 09174787.3
(22) Anmeldetag: 02.11.2009
(51) Int. Cl.: G01N 21/88

(54) **Verfahren und Vorrichtung zur optischen Prüfung von Werkstücken**
Device and method for optical checking of workpieces
Procédé et dispositif destinés à la vérification optique de pièces usinées

(43) Veröffentlichungstag der Anmeldung: 04.05.2011
(73) Patentinhaber: Sontec AG, 6280 Hochdorf (CH)
(72) Erfinder: Zurkirchen, Karl, CH-6006, Luzern (CH); Stohler, Christoph, CH-6003, Luzern (CH); Rüedi, Nicolai, CH-6004, Luzern (CH); Amrein, Othmar, CH-6274, Eschenbach (CH)
(74) Vertreter: Rutz & Partner

(56) Entgegenhaltungen:
- JP-A- 2 067 947
- JP-A- 2001 201 457
- US-A- 6 064 759

## Beschreibung

Die Erfindung betrifft eine Vorrichtung und ein Verfahren zur optischen Prüfung von Werkstücken, welche vereinzelt auf einer Transportvorrichtung von wenigstens einer Aufnahmeposition zu wenigstens einer Prüfposition und weiter zu wenigstens einer Abgabeposition transportierbar sind.

Eine derartige Vorrichtung, die der optischen Prüfung von Werkstücken dient, ist zum Beispiel in [1], WO 01/09013 A1, beschrieben. Bei dieser Vorrichtung werden die zu prüfenden Werkstücke vereinzelt auf einen als Transportvorrichtung dienenden, in sich geschlossenen Fördergurt aufgesetzt und von diesem entlang einer endlosen Transportbahn gefördert. Die in Ausnehmungen des Fördergurts gehaltenen Werkstücke werden in der Folge mittels optischen Messgeräten vermessen, die entlang der Transportbahn aufgestellt sind. Die zugeführten Werkstücke werden über eine peripher mit Ausnehmungen versehene Scheibe, welche drehbar gelagert und von einem Motor angetrieben ist, an die Ausnehmungen im Fördergurt abgegeben und von diesem in einer gewünschten Ausrichtung gehalten. Durch die Vereinzelung der Werkstücke werden störende Überlappungen benachbarter Werkstücke vermieden. Nach der Prüfung der Werkstücke werden diese entsprechend dem Messergebnis aus dem Fördergurt wieder entfernt und in einer ersten Box, die für einwandfreie Werkstücke vorgesehen ist, oder in einer zweiten Box abgelegt, die für mangelhafte Werkstücke vorgesehen ist.

Nachteilig bei dieser Lösung ist u.a., dass die Ausnehmungen im Fördergurt an die Werkstücke angepasst sein müssen, damit diese sicher gehalten werden. Die Vorrichtung ist daher nicht flexibel und kann nur einen Typ von Werkstücken bearbeiten. Ferner ist für das Einsetzen der Werkstücke eine Vorrichtung erforderlich, die mit dem Fördergurt zu synchronisieren ist, damit die Ausnehmungen im Fördergurt in einem bestimmten Takt bestückt werden können. Die dazu vorgesehene Scheibe ist mit Luftkanälen versehen, durch die die Werkstücke in demselben Takt angesaugt und wieder freigegeben werden. Die einzelnen Vorgänge, insbesondere das Einsetzen der Werkstücke in den Fördergurt, erfordert ferner relativ viel Zeit, so dass nur ein relativ geringer Durchsatz erzielt werden kann. Ferner ist bei dieser Vorrichtung mit Störungen zu rechnen, falls die Werkstücke nicht mit höchster Präzision positioniert werden. Nachteilig ist ferner, dass sehr kleine Werkstücke mit dieser Vorrichtung nicht erfasst werden können.

Aus [2], DE19613233A1, ist eine Vorrichtung bekannt, bei der als Transportvorrichtung nicht ein Fördergurt, sondern ein Drehteller vorgesehen ist, welcher die Werkstücke peripher hält und entlang einer kreisförmigen Transportbahn fördert. Damit die Werkstücke in einer gewünschten Position stabil gehalten werden, wird vorgesehen, dass sie an der Transportvorrichtung anhaften. Dazu werden auf der Transportvorrichtung Permanentmagnete vorgesehen, welche die ferro-magnetischen Werkstücke anziehen. Mit dieser Vorrichtung können daher nur ferro-magnetische Werkstücke erfasst und vermessen werden. Die Werkstücke können jedoch unterschiedliche Lagen einnehmen, so dass die gewünschte Reproduzierbarkeit der vorgesehenen Messkonditionen nicht erreicht wird. Aufgrund der Verwendung von Permanentmagneten ist ferner zu beachten, dass Schwierigkeiten bei der Aufnahme und der Abgabe der Werkstücke resultieren können. Die Trennung der Werkstücke von der Transportvorrichtung erfordert eine relativ hohe Kraft, weshalb die Entnahme der Werkstücke nicht leicht zu kontrollieren ist. Aufgrund der Schwierigkeiten, die bei der Verwendung magnetischer Kräfte auftreten können, kann auch bei dieser Vorrichtung kaum der gewünschte hohe Durchsatz erreicht werden. Ferner ist damit rechnen, dass die Beherrschung magnetischer Kräfte mit abnehmender Dimension der Werkstücke schwieriger wird, so dass auch bei dieser Vorrichtung sehr kleine Werkstücke nicht geprüft werden können. Ferner ist zu beachten, dass sich die Magnetisierung der Vorrichtungsgegenstände ändern kann. Insbesondere ist es möglich, dass sich Vorrichtungteile oder Werkzeuge unerwünscht magnetisieren, so dass Probleme bei der Manipulation der Werkstücke resultieren können.

Bei den Vorrichtungen von [1] und [2] ist ferner zu beachten, dass die optische Vermessung der Werkstücke durch die unmittelbar daran anliegenden Teile der Transportvorrichtung beeinträchtigt wird, weshalb bei der Bildverarbeitung grössere Aufwendungen erforderlich sind und die gewünschte Messgenauigkeit und Auflösung unter Umständen nicht erzielt werden kann. Insbesondere können durch die benachbarten Teile der Transportvorrichtung störende Lichtreflexionen oder Abschattungen verursacht werden, welche zu Fehlmessungen führen können.

Aus der JP 2067947 A ist eine Vorrichtung zur optischen Prüfung von Werkstücken bekannt, die eine Transportvorrichtung aufweist, der Werkstücke zuführbar sind, die zu wenigstens einer Prüfposition, an der eine optische Prüfung durchführbar ist, und weiter zu wenigstens einer Entnahmeposition transportierbar sind, an der die geprüften Werkstücke von einer Entnahmevorrichtung selektiv entnehmbar sind. Die Werkstücke, grössere Gussstücke aus Aluminium, werden von einem Feeder vereinzelt je in einen transparenten Behälter abgelegt und auf Dichtigkeit geprüft. Zur Prüfung von kleinen Gegenständen, insbesondere der Form dieser Gegenstände, ist diese Vorrichtung nicht geeignet.

Aus der JP 2001201457 A ist eine Vorrichtung bekannt, mittels der Fremdkörper innerhalb einer PET-Flasche erkannt werden können.

Der vorliegenden Erfindung liegt daher die Aufgabe zugrunde, ein verbessertes Verfahren und eine verbesserte Vorrichtung zur optischen Prüfung von Werkstücken zu schaffen.

Insbesondere ist eine Vorrichtung und ein Verfahren zu schaffen, mittels deren ein erhöhter Durchsatz von Werkstücken erzielt werden kann.

Die Vorrichtung soll ferner die Prüfung von extremen kleinen Werkstücken erlauben, die innerhalb eines Messprozesses in einem relativ weiten Bereich variieren können. Insbesondere sollen Werkstücke geprüft werden können, deren Abmessungen im Bereich von 1 mm oder weniger liegen. Weiterhin sollen Werkstücke geprüft werden können, welche aus beliebigen Materialien gefertigt sind. Es sollen Werkstücke mit Kopf, wie Schrauben, um Werkstücke ohne Kopf, wie Gewindestangen, geprüft werden können.

Zur erleichterten Vermessung sollen die Werkstücke, insbesondere rotationssymmetrische Werkstücke, auf der Transportvorrichtung präzise positionierbar sein, so dass sie vorzugsweise nur eine genau definierte Lage einnehmen können. Zur präzisen Vermessung sollen die Werkstücke zudem in einfacher Weise vereinzelt werden können. Wünschenswert wäre es dabei, dass Gruppen mit je wenigstens zwei vereinzelten Werkstücken der Prüfposition zugeführt und als Gruppe vermessen werden können.

Die Vermessung der Werkstücke soll mit hoher Präzision durchgeführt und insbesondere nicht durch Teile der Transportvorrichtung beeinträchtigt werden.

Die Übergabe der Werkstücke an die Transportvorrichtung soll zudem nicht an einen bestimmten Takt gebunden sein, sondern mittels einer Fördervorrichtung kontinuierlich erfolgen können, der die Werkstücke ungeordnet zugeführt werden.

Die Vermessung und Prüfung der Werkstücke soll "fliegend", d.h. ohne Anhalten der Transportvorrichtung durchgeführt werden können, so dass ein maximaler Durchsatz von Werkstücken realisiert werden kann.

Weiterhin soll die Vorrichtung kompakt aufgebaut sein und nur wenig Raum in Anspruch nehmen. Ferner soll die Vorrichtung mit geringem Aufwand steuerbar sein und nur einen geringen Wartungsaufwand verursachen.

Diese Aufgaben werden mit einem Verfahren und einer Vorrichtung gelöst, welche die in Anspruch 1 bzw. Anspruch 6 angegebenen Merkmale aufweist. Vorteilhafte Ausgestaltungen der Erfindung sind in weiteren Ansprüchen angegeben.

Die Vorrichtung, die der optischen Prüfung von Werkstücken dient, weist eine von einer Antriebseinheit angetriebene Transportvorrichtung auf, der von einer Ladevorrichtung Werkstücke zugeführt werden, die von der Transportvorrichtung zu wenigstens einer Prüfposition, an der eine optische Prüfung durchgeführt wird, und weiter zu wenigstens einer Entnahmeposition transportiert werden, an der die geprüften Werkstücke von einer Entnahmevorrichtung selektiv entnommen werden.

Erfindungsgemäss sind auf der Transportvorrichtung 1 mehrere transparente Aufnahmekörper fest montiert oder drehbar gelagert, die je wenigstens eine Ausnehmung aufweisen, in die die beliebige Werkstücke, Werkstücke mit Kopf oder Werkstücke ohne Kopf, einzeln oder in Gruppen eingefügt werden und die in wenigstens einer Prüfposition mit einer Prüfstrahlung beaufschlagt werden, um die von den Aufnahmekörpern gehaltenen Werkstücke abzubilden.

Die Werkstücke können vorteilhaft in die Ausnehmungen der transparenten Aufnahmekörper eingesetzt und daraus wieder entfernt werden. Innerhalb der Ausnehmungen werden die Werkstücke automatisch stabil gehalten. Vorzugsweise werden Ausnehmungen gewählt, die die Form eines Dreikantprismas aufweisen, von dem zwei Seiten durch den Aufnahmekörper gebildet werden. Durch die dritte Seite des Dreikantprismas, die offen gehalten wird, können die Werkstücke in die Ausnehmung so weit eintreten, bis sie an den anderen beiden Seiten anstossen. Je nach den Abmessungen der Werkstücke werden diese daher in einer bestimmten Höhe innerhalb der Ausnehmung gehalten. Von der Seite betrachtet, schweben die Werkstücke innerhalb der Ausnehmung bzw. innerhalb des Aufnahmekörpers. Prüfstrahlung, die durch den Aufnahmekörper hindurch geführt wird, wird daher nur durch das eingesetzte Werkstück reflektiert und kann ansonsten den Aufnahmekörper ungehindert passieren. Das Werkstück kann daher ohne störende Umgebungseinflüsse abgebildet werden.

Zu beachten ist ferner, dass durch die Ausbildung der Ausnehmung als Dreikantprisma ein Toleranzbereich geschaffen wird, innerhalb dem die zugeführten Werkstücke erfasst und zentriert werden.

Die vorzugsweise aus Glas oder Kunststoff gefertigten transparenten Aufnahmekörper werden vorzugsweise als mehrkantige gerade Prismen ausgebildet. Beispielsweise wird ein Fünfkantprisma vorgesehen, in das eine Ausnehmung in der Form eines Dreikantprismas eingearbeitet ist. Das Einarbeiten einer Ausnehmung in einen Glas- oder Kunststoffkörper ist jedoch ebenso mit Schwierigkeiten verbunden, wie das Giessen oder Formpressen eines entsprechenden Körpers. In einer vorzugsweisen Ausgestaltung wird daher ein aus wenigstens zwei Teilen zusammengesetzter Aufnahmekörper verwendet. Besonders vorteilhaft kann der Aufnahmekörpers aufgebaut werden, indem zwei Dreikantprismen, beispielsweise durch mechanische oder chemische Mittel, miteinander verbunden werden. Die Form der Ausnehmung als Dreikantprisma ist besonders vorteilhaft. Es ist jedoch auch möglich, Aufnahmekörper mit nicht-ebenen Seitenflächen zu verwenden. Dies ist beispielsweise in Randzonen von Vorteil, die keinen Einfluss auf die Vermessung haben, jedoch der Erfassung und Führung der Werkstücke dienen.

Die transparenten Aufnahmekörper, die unterschiedlich ausgestaltet sein können, erfüllen daher verschiedene Funktionen optimal.

Die Werkstücke können mittels Schwerkraft in die Ausnehmung der Aufnahmekörper transferiert werden und werden dort sicher erfasst und gehalten. Dabei ist eine relativ hohe Streuung erlaubt, d.h., die Werkstücke dürfen jeweils an unterschiedliche Positionen der Ausnehmung eintreten, die typischerweise um ein Mehrfaches grösser ist als die Werkstücke. Eine getaktete Übergabe mittels gesteuerten Vorrichtungsteilen ist nicht erforderlich. Die Werkstücke müssen daher nicht ergriffen und an die Aufnahmekörper übergeben werden. Dadurch entfallen wesentliche Probleme, die bei bekannten Vorrichtungen kaum oder nur mit hohen Aufwendungen lösbar sind. Insbesondere werden Probleme vermieden, die bei reduzierten Dimensionen der Werkstücke vermehrt in Erscheinung treten. Da es nicht notwendig ist, die Werkstücke zu erfassen und vereinzelt an die Transportvorrichtung zu übergeben, können Werkstücke zugeführt und geprüft werden, deren Abmessungen im Millimeter-Bereich oder darunter liegen. Erfindungsgemäss können Werkstücke mikromechanischer Produkte geprüft werden, die zuvor nur mit hohem Aufwand, gegebenenfalls unter dem Mikroskop geprüft werden konnten.

Ferner können die Werkstücke in die Ausnehmungen der Aufnahmekörper eingeworfen werden, während diese bewegt werden, weshalb ein kontinuierlich verlaufender Prozess realisierbar ist. Ebenso können die nicht am Aufnahmekörper haftenden Werkstücke mit minimalem Aufwand, beispielsweise mittels Druckluft oder nach einer Drehung des Aufnahmekörpers mittels Schwerkraft, wieder entfernt und einer entsprechenden Speichereinheit zugeführt werden.

Die erfindungsgemässe Lösung erlaubt ferner eine vorteilhafte Synchronisation der beispielsweise mittels eines Wendelförderers in unterschiedlichen zeitlichen Abständen zugeführten Werkstücke mit den Aufnahmekörpern. Dazu wird oberhalb jedes Aufnahmekörpers ein Einlasstrichter vorgesehen, in den die Werkstücke eingeworfen werden. Früher oder später eintreffende Werkstücke werden zentriert und durch die Austrittsöffnung des Einlasstrichters in die darunter liegende Ausnehmung im Aufnahmekörper transferiert, welche die Werkstücke ebenfalls in einem genügenden Toleranzbereich erfassen kann. Der gesamte Vorgang, welcher zu einer präzisen Bestückung der Aufnahmekörper führt, erfordert keine weiteren Hilfsmittel und auch keine Steuervorgänge. Ferner kann der Ladevorgang kontinuierlich ablaufen, ohne dass getaktete Vorgänge vorgesehen werden müssen.

In einer vorzugsweisen Ausgestaltung wird der Ladevorgang lediglich anhand der Prüfvorrichtung gesteuert, welche feststellt, ob in den Ausnehmungen zwei oder mehrere Werkstücke auftreten. Sofern Fehlbestückungen selten auftreten, werden diese ignoriert. Falls die Werkstücke nicht vermessen werden können, werden sie als undefiniert klassifiziert, ausgesondert und der Ladevorrichtung wieder zugeführt. Falls hingegen vermehrt unbestückte oder überbestückte Aufnahmekörper auftreten, so wird ein entsprechendes Korrektursignal an die Ladevorrichtung gesandt, um die Fördergeschwindigkeit entsprechend zu korrigieren.

Innerhalb der Ausnehmungen der Aufnahmekörper nehmen die Werkstücke virtuell einen Schwebezustand ein, so dass sie frei von störenden optischen Effekten abgebildet werden können. Die Vermessung erfolgt mit hoher Präzision und Kantenschärfe, weshalb Mängel der Werkstücke präzise ermittelt werden können. Ferner können mehrere Werkstücke gleichzeitig optisch erfasst werden, falls sie sich in der Ausnehmung nicht überlappen. Dies kann erzielt werden, indem Führungselemente oberhalb der Aufnahmekörper, beispielsweise in den Einlasstrichtern, vorgesehen werden, welche die Werkstücke in die eine oder andere Richtung leiten.

Die Transportvorrichtung erlaubt die feste Montage oder die drehbare Lagerung sowie den Transport der transparenten Aufnahmekörper entlang einer in sich geschlossenen, kreisförmigen oder teilweise linearen Transportbahn. Dazu kann die Transportvorrichtung z.B. als Rotor, als Ring, als Band oder Kette ausgebildet sein. In vorzugsweisen Ausgestaltungen sind die Aufnahmekörper derart gelagert, dass sie Bewegungen in der Ebene oder im Raum ausführen Werkstücke beliebig aufnehmen, darstellen und abgeben können. Dies kann vorteilhaft realisiert werden, indem entlang der Transportbahn Steuerelemente, wie Kurven oder Kulissen, vorgesehen werden, welche die Aufnahmekörper erfassen und drehen. Dazu werden die Aufnahmekörper vorzugsweise auf einer Halterung angeordnet, welche in der Transportvorrichtung gehalten und zwischen wenigstens zwei Positionen drehbar ist. Dabei wird vorzugsweise vorgesehen, dass die an einem Punkt oder einer Achse gelagerte Halterung in jeder Position durch ein mechanisches oder magnetisches Element fixierbar ist. Dadurch kann der Aufnahmekörper an wenigstens einer Ladeposition, an wenigstens einer Prüfposition, sowie an wenigstens einer Entnahmeposition, eine genau definierte Lage einnehmen und halten.

Vorzugsweise umfasst die Transportvorrichtung einen Aufnahmering, auf dem vorzugsweise identische Aufnahmekörper vorzugsweise in gleichen Abständen fest montiert oder drehbar gelagert sind.

Oberhalb des Aufnahmerings wird vorzugsweise ein Synchronisationsring mit den beschriebenen Einlasstrichtern vorgesehen. Die Verwendung des Aufnahmerings und des Synchronisationsrings erlaubt einen kompakten Aufbau der Transportvorrichtung, die nicht nur eine Transportfunktion, sondern auch die Synchronisationsfunktion und die Manipulationsfunktion erfüllt, indem sie die Werkstücke an den Prüfposition in den gewünschten Positionen exponiert. Der Synchronisationsring und der Aufnahmering sind vorzugsweise durch Distanzelemente voneinander getrennt, so dass ein frei liegender Zwischenraum resultiert, in den die Aufnahmekörper zumindest soweit hinein ragen, dass deren Ausnehmungen mit den darin gehaltenen Werkstücken innerhalb des Zwischenraums liegen und optisch erfasst werden können. Dabei wird die Lichtquelle, oder ein optisches Umlenkelement, vorzugsweise auf der Innenseite und das Aufnahmegerät, oder ein optisches Umlenkelement, auf der Aussenseite des Aufnahmerings angeordnet. Dies hat den Vorteil, dass die Prüfstrahlung ausgehend von nur einer zentral angeordneten Lichtquelle mehreren Prüfpositionen zuführbar ist. Z.B. wird das vom Aufnahmekörper gehaltene Werkstück an einer ersten Prüfposition mit der Hauptachse senkrecht und an einer zweiten Prüfposition parallel zur Prüfstrahlung ausgerichtet. Die Prüfstrahlung wird vorzugsweise über optische Elemente entlang einem Strahlungsweg geleitet, der ein "U" beschreibt, dessen Unterseite im Zwischenraum zwischen dem Synchronisationsring und dem Aufnahmering verläuft. Auf diese Weise kann die Prüfvorrichtung im freien Raum oberhalb der Transportvorrichtung angeordnet werden, während der Raum auf der Höhe der Transportvorrichtung für die Manipulation der Werkstücke freigehalten wird.

Nachfolgend wird die Erfindung anhand von Zeichnungen näher erläutert. Dabei zeigt:
- Fig. 1: eine erfindungsgemässe Prüfvorrichtung 100 mit einer Ladevorrichtung 2, mittels der zu prüfende Werkstücke 9 an eine als Rotor ausgestaltete Transportvorrichtung 1 abgegeben und von dieser zu einer Prüfvorrichtung 3 und weiter zu einer Entnahmevorrichtung 4 transportiert werden;
- Fig. 2: die Prüfvorrichtung 100 von Figur 1 mit Blick auf die Transportvorrichtung 1, welche einen mit Einlasstrichtern 111 versehen Synchronisationsring 11 und einen Aufnahmering 12 aufweist, auf dem transparente Aufnahmekörper 121 vorgesehen sind, die der Aufnahme der zu prüfenden Werkstücke 9 dienen;
- Fig. 3: die Transportvorrichtung 1 von Figur 2 mit dem Synchronisationsring 11 und dem Aufnahmering 12, die mit einem Montageteller 14 verschraubt werden, der seinerseits mit der Antriebswelle 810, der Antriebseinheit 81 verbunden wird;
- Fig. 4: die zusammengesetzte Transportvorrichtung 1 von Figur 3 von oben gesehen;
- Fig. 5: die zusammengesetzte Transportvorrichtung 1 von Figur 3 von der Seite gesehen;
- Fig. 5a: einen Ausschnitt aus Figur 5 mit dem freiliegenden Teil eines Aufnahmekörpers 121, welcher eine Ausnehmung 1211 aufweist, in der ein Werkstück 9 gehalten ist;
- Fig. 6: eine schematische Darstellung des Synchronisationsrings 11 von Figur 5 mit darunter angeordneten Aufnahmekörpern 121, die in einer vorzugsweisen Ausgestaltung in definierte Lagen drehbar sind, in denen sie beladen, durchleuchtet oder entladen werden;
- Fig. 6a: zwei Dreikantprismen 121A, 121B, welche zu einem Fünfkantprisma bzw. zu einem Aufnahmekörper 121 zusammengefügt werden;
- Fig. 7: eine vorzugsweise Ausgestaltung des Synchronisationsrings 11, welcher zusätzlich mit Führungselementen 1115 versehen ist, welche es erlauben zwei oder mehrere Werkstücke 9 in der Ausnehmung 1211 des Aufnahmekörpers 121 geordnet abzulegen;
- Fig. 8: einen Teil des Aufnahmerings 12, der zylindrische Öffnungen 1200 aufweist, in denen je eine mit einem Aufnahmekörper 121 versehene Halterung 125 drehbar gelagert ist;
- Fig. 9: die mit einem zweiteiligen Aufnahmekörper 121 versehene Halterung 125 von Figur 8, die innerhalb der Öffnung 1200 in einem Winkel von 90° von einem ersten zu einem zweiten Anschlag drehbar ist und dort je von einem Magneten 1261,1262 gehalten wird; und
- Fig. 10: die Prüfvorrichtung 100 von Figur 1 nach dem Einbau in ein Gehäuse 1000 in Schnittdarstellung.

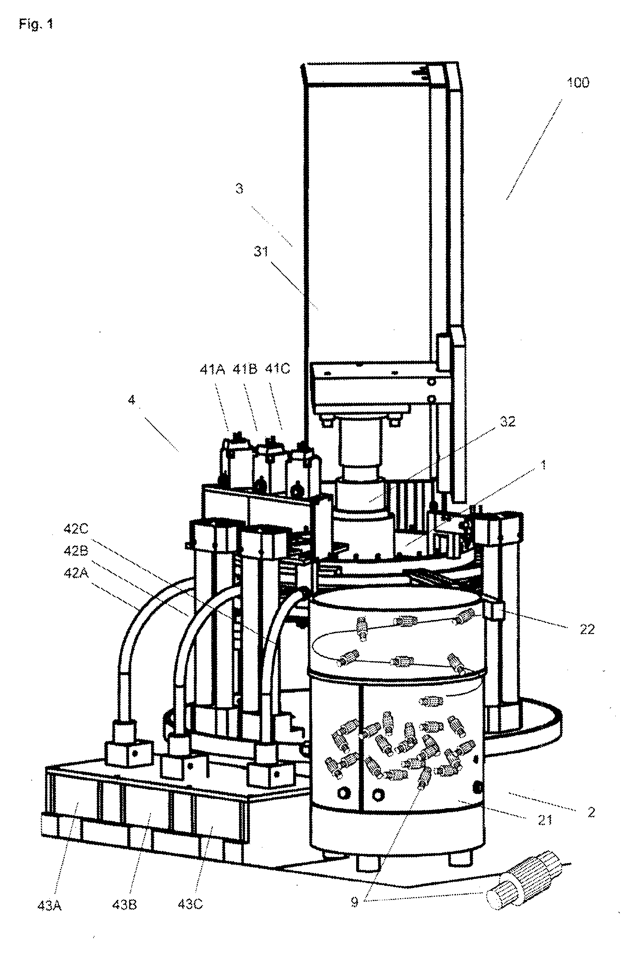

Figur 1 zeigt eine erfindungsgemässe Prüfvorrichtung 100, welche eine Ladevorrichtung 2, eine Transportvorrichtung 1, eine Prüfvorrichtung 3 und eine Entnahmevorrichtung 4 umfasst.

Mittels der Ladevorrichtung 2, die in der vorliegenden Ausgestaltung einen Wendelförderer 21 und einen daran anschliessenden Linearförderer 22 umfasst, werden Werkstücke 9 zur Transportvorrichtung 1 gefördert. Grundsätzlich sind beliebige Fördersysteme, wie Wendelförderer, Zentrifugalförderer oder Rohrförderer, einsetzbar, welche Werkstücke 9 in einem bestimmten Takt oder in unterschiedlichen zeitlichen Abständen an die Transportvorrichtung 1 abgeben. Wendelförderer haben den Vorteil, dass gehäuft vorliegende Werkstücke 9 erfasst und seriell gefördert werden, so dass bei der Transportvorrichtung 1 jeweils eine serielle Übergabe mit einem wählbaren Durchsatz erfolgt.

Mit der Prüfvorrichtung 100 können Werkstücke 9 beliebiger Grösse geprüft werden, z.B. Teile mikromechanischer Vorrichtungen oder Teile eines Uhrwerks. Ferner können Werkstücke 9 geprüft werden, welche aus beliebigen Materialien gefertigt sind. In Figur 1 sind rotationssymmetrische Werkstücke 9 gezeigt, welche präzise und, sofern erforderlich, in verschiedenen Ausrichtungen vermessen werden können.

Die zugeführten Werkstücke 9 werden von der Transportvorrichtung 1 zu einer von einem Computer gesteuerten Prüfvorrichtung 3 gefördert, welche eine Lichtquelle 32 und ein Aufnahmegerät 31 umfasst. Die Prüfvorrichtung 3 führt eine optische Prüfung der zugeführten Werkstücke 9 durch und unterscheidet zwischen guten und mangelhaften Werkstücken 9 und sonder vorzugsweise auch undefinierte Werkstücke aus, welche in den Prüfprozess zurückgeführt werden. Falls z.B. aufgrund verschiedener Ursachen kein klares Prüfungsergebnis erzielt wurde, werden die betreffenden Werkstücke 9 als undefiniert klassifiziert. Dies kann beispielsweise geschehen, falls sich Werkstücke 9 innerhalb der Ausnehmung 1211 der Aufnahmekörper 121 überlappen.

Nach der Prüfung der Werkstücke 9 werden diese zu einer Entnahmevorrichtung 4 geführt, welche die geprüften Werkstücke 9 an drei verschiedenen Entnahmepositionen selektiv von der Transportvorrichtung 1 trennt. Dazu wird wahlweise Druckluft durch eines von drei Ventilen 41A, 41B, 41C einer Entnahmeposition zugeführt, von der das dort liegende gute, mangelhafte oder undefinierte Werkstück 9 in einen von drei Transferschläuchen 42A, 42B, 42C eingeblasen und zu einer entsprechenden Speichereinheit 43A, 43B, 43C geführt, in der gute, mangelhafte bzw. undefinierte Werkstücke 9 abgelegt werden. Die Endlagerung der Aufnahmekörper 121 kann auch auf andere Weise, beispielsweise durch mechanische Elemente oder durch Schwerkraft erfolgen, indem die Aufnahmekörper nach unten gedreht werden.

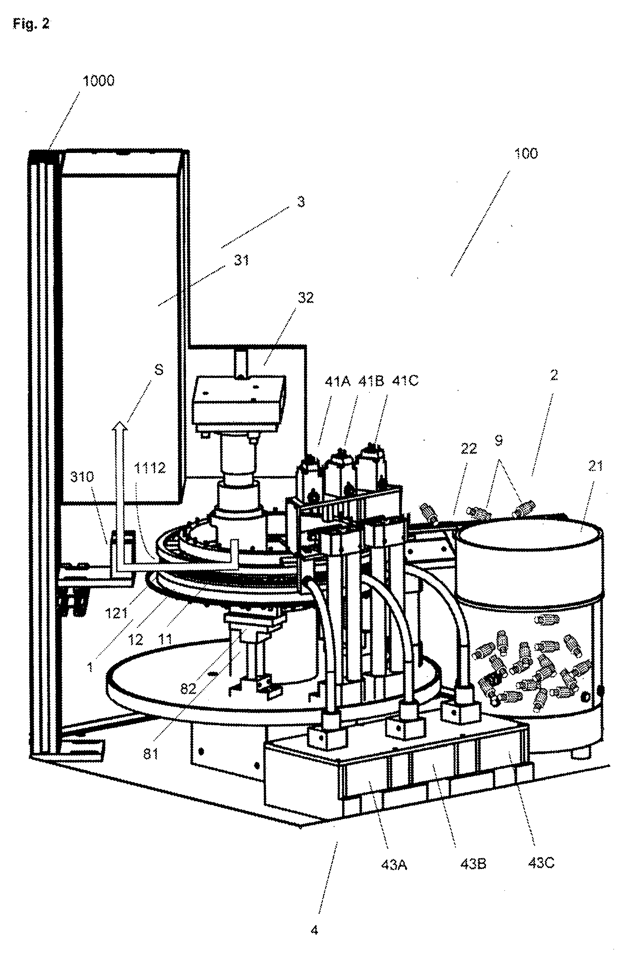

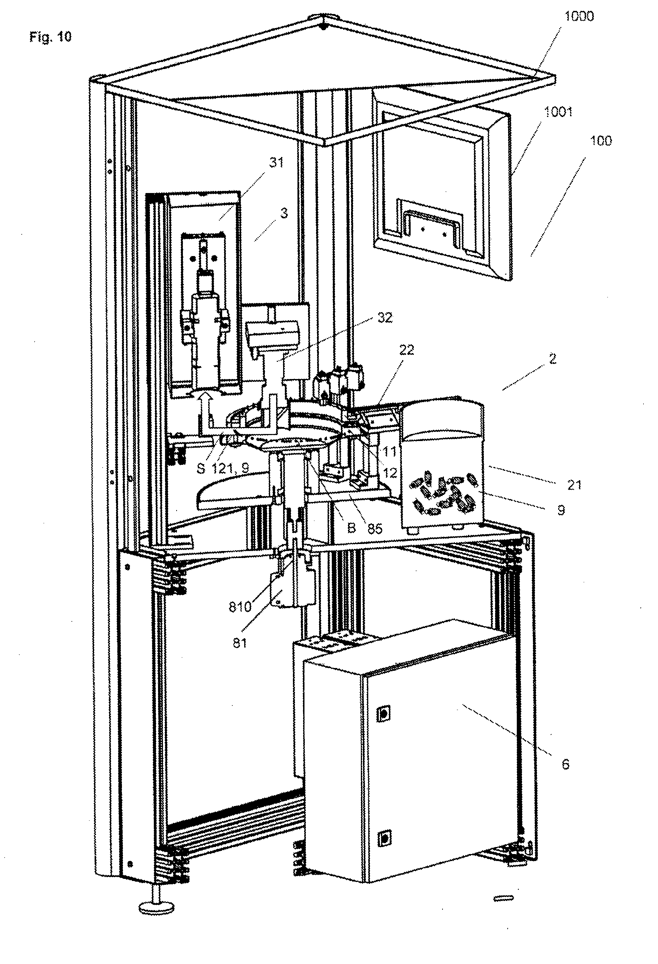

Figur 2 zeigt die Prüfvorrichtung 100 von Figur 1 mit Blick auf die Transportvorrichtung 1, welche einen mit Einlasstrichtern 111 versehen Synchronisationsring 11 und einen Aufnahmering 12 aufweist, auf dem transparente Aufnahmekörper 121 drehbar gelagert sind, die der Aufnahme der zu prüfenden Werkstücke 9 dienen. Die Transportvorrichtung 1 ist als kompakter Rotor aufgebaut, welcher von einem Motor 81 angetrieben wird (siehe auch Figur 10). Die Beleuchtungseinheit 32 ragt in den Rotor hinein und gibt eine Prüfstrahlung S ab, welche zwischen dem Synchronisationsring 11 und dem Aufnahmering 12 hindurch und über ein optisches Umlenkelement, ein Prisma oder ein Spiegel, zur Aufnahmeoptik der Kamera 31 geführt wird (siehe auch Figur 10).

Nachstehend wird die in den Figuren 1 und 2 gezeigte Transportvorrichtung 1 näher beschrieben.

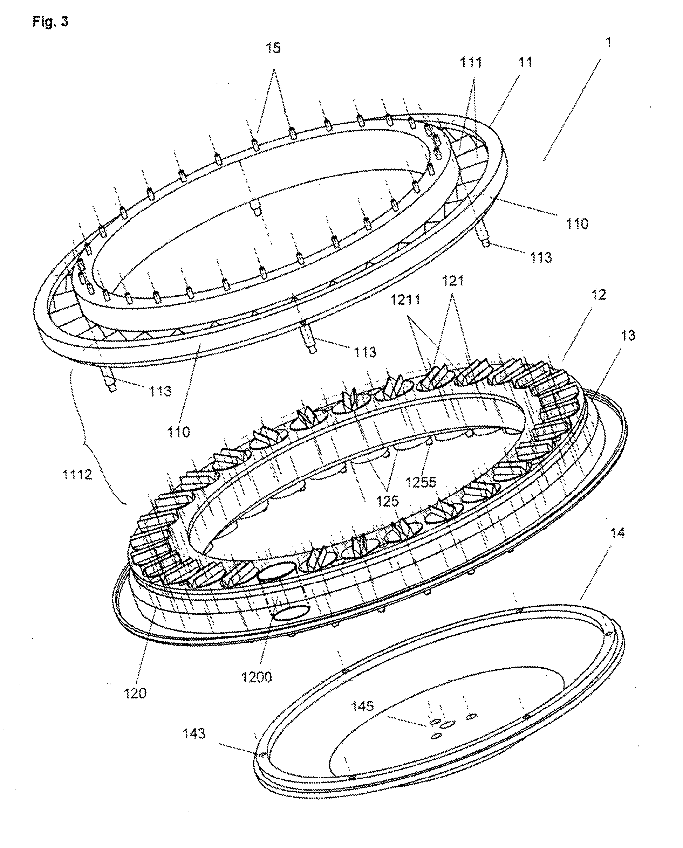

Figur 3 zeigt den Synchronisationsring 11, den Aufnahmering 12 und einen Montageteller 14 der Transportvorrichtung 1 vor dem Zusammenbau. Der Synchronisationsring 11 weist einen Ringkörper 110 auf, entlang dem nach unten geöffnete Einlasstrichter 111 eine in sich geschlossene Trichterkette bilden. An der Unterseite des Ringkörpers 110 sind Distanzelemente 113 vorgesehen, welche auf dem Aufnahmering 12 abgestützt werden. Dadurch wird zwischen dem Synchronisationsring 11 und dem Aufnahmering 12 stets ein Zwischenraum 1112 freigehalten. Der Synchronisationsring 11 und der Aufnahmering 12 werden mit dem Montageteller 14 verschraubt, der der Aufnahme von Montageschrauben dienende Gewindebohrungen 143 aufweist und der mittels Montageelementen 145 mit der Antriebswelle 810, der Antriebseinheit 81 verbunden wird (siehe Figur 10).

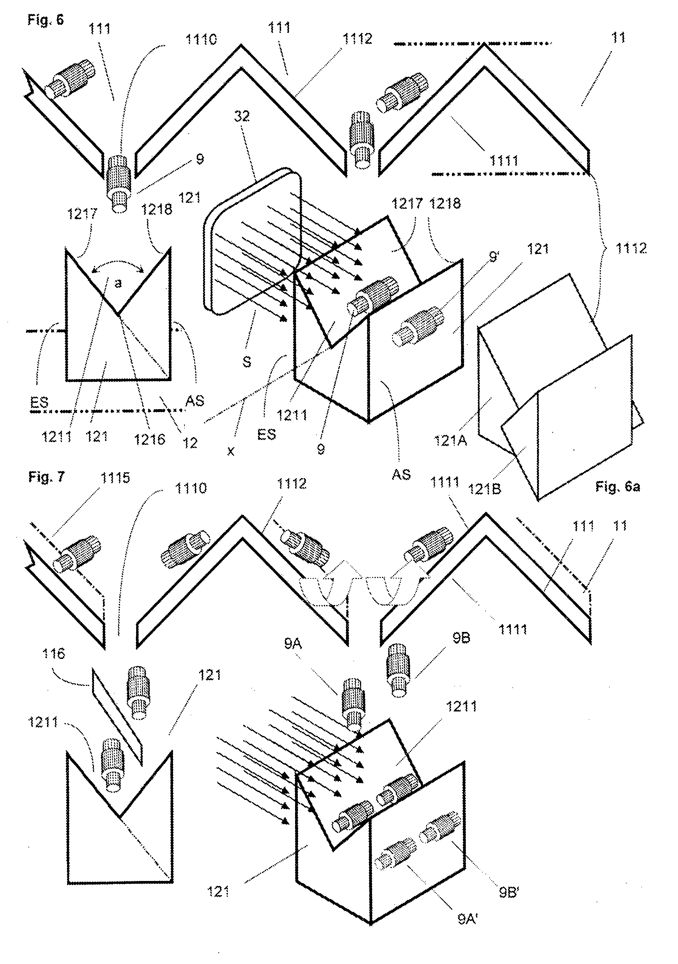

Der Aufnahmering 12 weist einen Ringkörper 120 mit zylindrischen Öffnungen 1200 auf, in die Halterungen 125 eingesetzt werden, welche die transparenten Aufnahmekörper 121 tragen. Die Aufnahmekörper 12, die je wenigstens eine der Aufnahme eines Werkstücks 9 dienende Ausnehmung 1211 aufweisen, sind je unter einem Einlasstrichter 111 angeordnet, so dass jedem Aufnahmekörper 12 ein Einlasstrichter 111 zugeordnet ist. Werkstücke 9, die den Einlasstrichtern 111 zugeführt werden, werden daher jeweils an die darunter liegenden Aufnahmekörper 121 abgegeben. Die Halterungen 125 sind innerhalb der Öffnungen 1200 drehbar gelagert, so dass die Ausnehmungen 1211 in den Aufnahmekörpern 12 entsprechend den Austrittsöffnungen 1110 der darüber liegenden Einlasstrichter 111 ausgerichtet werden können (siehe Figur 6). Durch die entsprechende Ausrichtung der Ausnehmungen 1211 wird gewährleistet, dass die von den Einlasstrichtern 111 abgegebenen Werkstücke 9 sicher aufgefangen werden können. Sofern einzelne Werkstücke 9 in den Aufnahmekörpern 121 nicht festgehalten werden, so fallen sie entweder nach innen in den Montageteller 14 oder nach aussen in einen am Aufnahmering 12 befestigten Flanschring 13. Dadurch werden fehlgeleitete Werkstücke 9 korrekt aufgefangen und können, ohne Störungen zu verursachen, wieder der Ladevorrichtung 2 zugeführt werden.

Die Drehung der Halterungen 125 erfolgt mittels Steuerelementen 1255, Zapfen oder Nocken, die an der Halterung 125 vorgesehen sind und die z.B. von einer Steuerkurve 82 erfasst und verschoben werden, welche unterhalb des Aufnahmerings 12, angeordnet wird. Mit der in Figur 2 gezeigten Steuerkurve 82 werden die Halterungen 125 vor Erreichen der Entnahmepositionen in eine passende Lage gedreht. Die Drehung der Halterungen 125 mit den Aufnahmekörpern 121 erfolgt daher automatisch mit der Drehung der Transportvorrichtung 1, weshalb auf alternativ einsetzbare Antriebs- und Steuerelemente verzichtet werden kann.

Vorzugsweise werden die Aufnahmekörper 121 mit der Hauptachse x der Ausnehmung 1211 vor Erreichen der wenigstens einen Ladeposition, der wenigstens einen Prüfposition und der wenigstens einen Entnahmeposition jeweils um 90° gedreht senkrecht und parallel zum Radius des Aufnahmerings 12 ausgerichtet, sofern diese Ausrichtung nicht bereits vorliegt.

Damit die Prüfvorgänge und die Entnahmevorgänge jeweils durchgeführt werden, wenn sich die Aufnahmekörper 12 an den entsprechenden Positionen befinden, ist der Synchronisationsring 11 mit Markierelementen 15 versehen, welche bei Erreichen einer bestimmten Position z.B. mittels einer Lichtschranke detektiert werden.

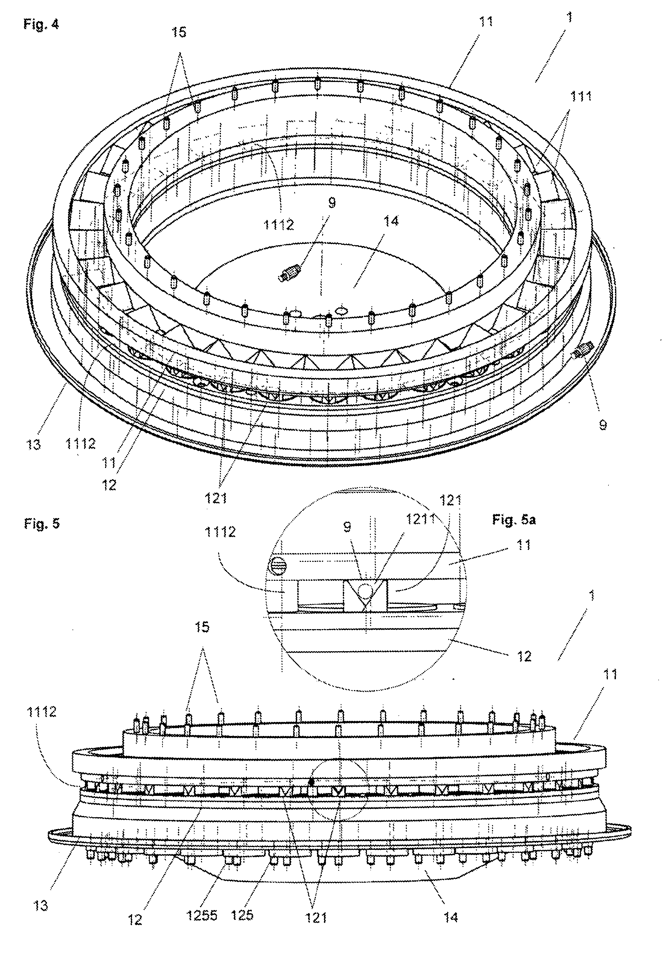

Figur 4 zeigt die zusammengesetzte Transportvorrichtung 1 von Figur 3 von oben gesehen. Figur 5 zeigt die zusammengesetzte Transportvorrichtung 1 von Figur 3 von der Seite gesehen.

Figur 5a zeigt einen Ausschnitt aus Figur 5 mit dem freiliegenden Teil eines Aufnahmekörpers 121 mit der Ausnehmung 1211, in der ein Werkstück 9 gehalten ist. Die Ausnehmung 1211 des Aufnahmekörpers 121 liegt im Zwischenraum 1112 zwischen dem Synchronisationsring 11 und dem Aufnahmering 12 und liegt an einer Prüfposition daher im Strahlengang der Prüfstrahlung S.

Figur 6 zeigt eine schematische Darstellung des Synchronisationsrings 11 von Figur 5 mit den Einlasstrichtern 111, unterhalb derer der Aufnahmering 12 mit den transparenten Aufnahmekörpern 121 angeordnet ist. Die Ausnehmung 1211 jedes Aufnahmekörpers 121 ist direkt unterhalb der Austrittsöffnung 1110 eines Einlasstrichters 111 positioniert, so dass Werkstücke 9, die von der Ladevorrichtung 2 abgegeben werden, aus der Austrittsöffnung 1110 des Einlasstrichters 111 direkt in die Ausnehmung 1211 des zugehörigen Aufnahmekörpers 121 hinein fallen und dort zentriert gehalten werden. In der gezeigten Ausgestaltung weist jeder Einlasstrichter 111 eine Frontseite 1111 und eine Rückseite 1112 auf, die dafür sorgen, dass früher und später eintreffende Werkstücke 9 via die Austrittsöffnung 1110 den Aufnahmekörpern 12 zugeführt und somit mit diesen synchronisiert werden.

Figur 6 zeigt weiter die transparenten Aufnahmekörper 121 in einer bevorzugten Ausgestaltung, in der diese die Form eines geraden Fünfkantprismas aufweisen. Dieses kann aus Glas oder Kunststoff gefertigt werden, indem in ein gerades Vierkantprisma eine Ausnehmung in der Form eines Dreikantprismas eingearbeitet wird. Dies ist jedoch mit erheblichem Aufwand verbunden. Ferner kann die innen liegende Kante 1216 des Prismas auf diese Weise nur mit sehr hohem Aufwand in der gewünschten Präzision gefertigt werden.

Wie dies in Figur 6a gezeigt ist, kann der Aufnahmekörper bzw. das Fünfkantprisma 121 hingegen besonders vorteilhaft durch eine grösseres und ein kleineres Dreikantprisma 121A, 121B gebildet werden, die beispielsweise mittels eines Klebstoffes miteinander verbunden werden. Damit die Dreikantprismen 121A, 121B unmittelbar aneinander anliegend miteinander verbunden werden können, wird der Klebstoff vorzugsweise in Nuten oder Rillen eingefügt, die in die zu verbindenden Oberflächen der Dreikantprismen 121A, 121B eingearbeitet werden.

Ferner zeigt Figur 6 in räumlicher Darstellung einen Aufnahmekörper 121, in dessen Ausnehmung 1211 ein Werkstück 9 deponiert wurde. Der Aufnahmekörper 121 wird auf der Eintrittsseite ES von der Strahlungsquelle 32 mit einer Prüfstrahlung S beaufschlagt, welche den Aufnahmekörper 121 und die Ausnehmung 1211 als Bündel paralleler Strahlen durchdringt. Das Werkstück 9 wird auf der Austrittsseite AS des Aufnahmekörpers 121 durch die austretende Prüfstrahlung S abgebildet, die weiter zur Optik der Kamera 31 geführt wird. Es ist symbolisch gezeigt, dass das Abbild 9' des Werkstücks 9 schwebt und von Vorrichtungsteilen nicht beeinträchtigt wird. Das Abbild 9'jedes Werkstücks 9 weist daher eine hohe Auflösung auf und ist frei von optischen Störungen. Durch die Auswertung des Abbilds 9' in der Prüfvorrichtung können die Abmessungen des Werkstücks 9 und somit dessen Zustand präzise bestimmt werden.

Vorzugsweise wird der Öffnungswinkel a der Ausnehmung 1211 derart gewählt, dass das Werkstück 9 von den Seiten 1217, 1218 der Ausnehmung 1211 etwa in halber Höhe derselben und somit beabstandet von der Unterkante 1216 gehalten ist. Die Unterkante 1216 der Ausnehmung 1211 tritt daher optisch nicht störend in Erscheinung. Hingegen wird das Werkstück 9 in der Ausnehmung 1211 automatisch zentriert und entweder in einer ersten oder in einer zweiten Lage mit der Hauptachse parallel zur Hauptachse des Aufnahmekörpers 121 bzw. parallel zur Unterkante 1216 ausgerichtet. Durch die stets gleiche Ausrichtung der aufgenommenen Werkstücke 9 reduziert sich der Vermessungsaufwand.

Ferner werden die Werkstücke 9 in der Ausnehmung 1211 von zwei Seiten gehalten, weshalb sie bei der Rotation der Transportvorrichtung 1 oder bei einer Drehung des Aufnahmekörpers 121 ihre Position nicht verlassen können. Dabei kann vorgesehen werden, dass die Aufnahmekörper 121 zwischen der Ladeposition und der Entnahmeposition stets tangential zur Transportvorrichtung 1 ausgerichtet sind, so dass die Wirkung der Zentrifugalkräfte neutralisiert wird. Diese tangentiale Ausrichtung ist ferner die bevorzugte Ausrichtung der Aufnahmekörper 121 an der Prüfposition. An einer Entnahmeposition kann hingegen von einer der Grundseiten des Dreikantprismas Druckluft in die Ausnehmung eingeführt und das geprüfte Werkstück 9 ausgestossen werden.

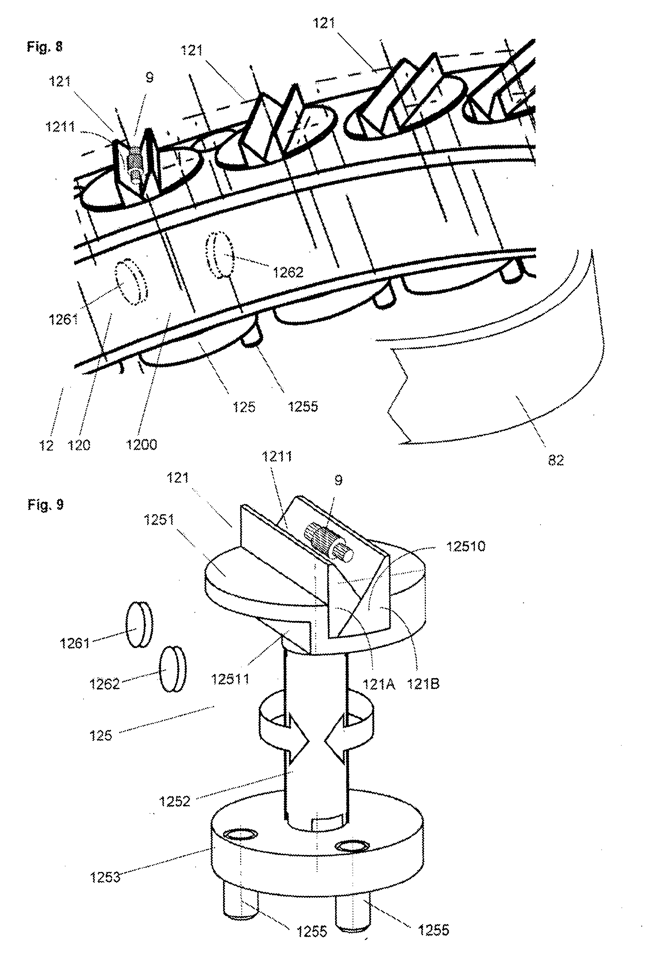

Figur 7 zeigt eine vorzugsweise Ausgestaltung des Synchronisationsrings 11, welcher zusätzlich mit Führungselementen 1115 versehen ist, welche es erlauben, zwei oder mehrere Werkstücke 9 in der Ausnehmung 1211 des Aufnahmekörpers 121 geordnet abzulegen. Ein früher eintreffendes Werkstück 9 wird von der ersten Flanke 1111 des Einlasstrichters 111 in die eine und von der zweiten Flanke 1112 des Einlasstrichters 111 in die andere Richtung geführt, so dass ein früher und ein später eintreffendes Werkstück 9A, 9B radial voneinander separiert und getrennt in die Ausnehmung 1211 des Aufnahmekörpers 121 abgelegt werden. Figur 7 zeigt, dass für die derart abgelegten Werkstücke 9A, 9B bei der optischen Prüfung zwei separate Abbildungen 9A', 9B" resultieren, die mit geringem Aufwand ausgewertet werden können. Durch den Transfer von je zwei Werkstücken 9A, 9B zu einem Aufnahmekörper 121 kann der Durchsatz verdoppelt werden.

Die Separierung der Werkstücke, die von einer oder mehreren Ladevorrichtungen 2 zugeführt werden, kann auf verschiedene Art erfolgen. Es ist möglich, Werkstücke getrennt in den Synchronisationsring 11 einzuwerfen. Ferner können zwei oder mehrere Einlasstrichter 111 parallel zueinander vorgesehen werden. Alternativ kann ein Einlasstrichter 111 mehrere Austrittsöffnungen 1110 aufweisen. Weiterhin kann ein Trennelement 116 zwischen dem Einlasstrichter 111 und dem Aufnahmekörper 121 vorgesehen werden.

Grundsätzlich ist kann der Durchsatz weiter erhöht werden. Es können zwei Ausnehmungen 1211 im Aufnahmekörper 121 vorgesehen werden. Z.B. wird eine höher liegende und eine tiefer liegende Ausnehmung 1211 vorgesehen, so dass die darin vorgesehenen Werkstücke 9 in der Höhe voneinander getrennt werden.

Figur 8 zeigt einen Teil des Aufnahmerings 12, der zylindrische Öffnungen 1200, vorzugsweise abgestufte Bohrungen, aufweist, in denen je eine Halterung 125 drehbar gelagert ist. Die Halterungen 125 sind mit einem nockenförmigen Steuerelement 1255 versehen, welches entlang der Transportbahn B mit einer Steuerkurve 82 (siehe auch Figur 2) zusammenwirken kann, um die Halterung 125 auszurichten.

Die in Figur 9 räumlich gezeigten Halterungen 125 weisen ein Kopfstück 1251, ein Fussstück 1253 auf, die durch einen dazwischen liegenden Schaft 1252 miteinander verbunden sind. Das Kopfstück 1251 ist an der Oberseite mit einem Aufnahmekanal 12510 versehen, in den ein zweiteiliger Aufnahmekörper 121 eingesetzt ist. An der Unterseite weist das Kopfstück 1251 einen gerade verlaufenden Anschlag 12511 auf, welcher in einer ersten und in einer zweiten Drehlage der Halterung 125 an den Ringkörper 120 anschlagen und dort mittels Magneten 1261, 1262 fixiert werden kann. Das Fussstück ist mit zwei Steuerelementen 1255 versehen, die mit wenigstens einer Steuerkurve 82 zusammenwirken können.

Figur 10 zeigt die in einem Gehäuse 1000 eingebaute Prüfvorrichtung 100 von Figur 1 in Schnittdarstellung. Es ist ersichtlich, dass die Prüfvorrichtung 100 nur wenig Platz in Anspruch nimmt, weshalb innerhalb des Gehäuses 1000 weitere Vorrichtungen, wie eine Steuer- und Rechenvorrichtung 6 sowie ein Monitor 1001, problemlos integriert werden können.

Die Prüfvorrichtung 100 ist auf einer Platte 85 aufgebaut, welche Hilfselemente, wie Stützen für die Steuerkurven 82 und den Linearförderer 22, trägt. Unterhalb der Platte 85 ist der Antriebsmotor 81 vorgesehen, dessen Antriebswelle 810 mit der Transportvorrichtung 1 verbunden ist. In der Schnittdarstellung ist der Verlauf der Prüfstrahlung S, welche die Transportvorrichtung 1 radial durchquert, gut ersichtlich.

Aufgrund der vorteilhaften Raumausnutzung können vorteilhaft auch zwei oder mehr Transportvorrichtungen 1 übereinander angeordnet und erfindungsgemäss betrieben werden.

In den Zeichnungen ist die Transportvorrichtung 1 als Rotor dargestellt. Die erfindungsgemässe Lösung ist jedoch nicht auf diese Ausgestaltung beschränkt. Die Transportvorrichtung 1 kann auch als in sich geschlossener Linearförderer, z.B. als Band oder Kette, ausgestaltet sein, welche die darauf aufgesetzten Aufnahmekörper 121 entlang einer beliebigen Bahn B führt. Die Aufnahmekörper 121 können ebenfalls von einer drehbar gelagerten Halterung 125 gehalten und bedarfsweise ausgerichtet werden. Die Ausgestaltung der Transportvorrichtung 1 als Linearförderer wird insbesondere dann in Erwägung gezogen, wenn eine Vielzahl von Ladepositionen, Prüfpositionen und Entnahmepositionen vorzusehen ist.

### Literaturverzeichnis

- [1]: WO 01/09013 A1
- [2]: DE19613233A1

## Patentansprüche

1. Verfahren zur optischen Prüfung von Werkstücken (9), die von einer Ladevorrichtung (2) an eine von einer Antriebseinheit (81) angetriebene Transportvorrichtung (1) abgegeben und von dieser zu einer Prüfvorrichtung (3), welche die optische Prüfung durch führt, und weiter zu einer Entnahmevorrichtung (4) transportiert werden, welche die geprüften Werkstücke (9) in Abhängigkeit der Prüfergebnisse selektiv entnimmt, wobei auf der Transportvorrichtung (1) mehrere transparente Aufnahmekörper (121) vorgesehen sind, die je wenigstens eine Ausnehmung (1211) aufweisen, in die die Werkstücke (9) einzeln oder in Gruppen eingefügt werden, und wobei jeder Aufnahmekörper (121) an der Prüfposition mit einer Prüfstrahlung (S) beaufschlagt wird, die von der Prüfvorrichtung (3) erfasst und ausgewertet wird, **dadurch gekennzeichnet, dass** die Aufnahmekörper (121) auf einem Aufnahmering (12) fest montiert oder drehbar gelagert sind, über dem ein Synchronisationsring (11) mit Einlasstrichtern (111) montiert ist, wobei die Werkstücke (9) von der Ladeeinheit (2) in die Einlasstrichter (111) eingeworfen und von diesen je in die Ausnehmung (1211) eines zugeordneten Aufnahmekörpers (121) fallen gelassen werden.

2. Verfahren nach Anspruch 1, **dadurch gekennzeichnet, dass** jeder Aufnahmekörper (121) von einer in der Transportvorrichtung (1) gelagerten Halterung (125) getragen wird, welche in einer Ebene oder im Raum zwischen wenigstens zwei Positionen gedreht und in diesen Positionen fixiert wird, so dass der Aufnahmekörper (121) an wenigstens einer Ladeposition, an der die Werkstücke (9) von der Ladevorrichtung (2) abgegeben werden, an wenigstens einer Prüfposition, an der die optische Vermessung der Werkstücke (9) erfolgt, sowie an wenigstens einer Entnahmeposition, an der die Werkstücke (9) von der Entnahmevorrichtung (4) selektiv entnommen werden, eine definierte Lage einnehmen.

3. Verfahren nach Anspruch 2, **dadurch gekennzeichnet, dass** die halterung (125) in jeder der wenigstens zwei Positionen magnetisch fixiert wird.

4. Verfahren nach Anspruch 1, 2 oder 3, **dadurch gekennzeichnet, dass** die Werkstücke (9) dem Synchronisationsring (11) kontinuierlich zugeführt werden und dass die Prüfvorrichtung (3) nach der Detektion eines Markierelements (15) die optische Prüfung und/oder die selektive Entladung der Werkstücke (9) durchführt, ohne dass die Transportvorrichtung angehalten wird.

5. Verfahren nach Anspruch 3 oder 4, **dadurch gekennzeichnet, dass** die Ausnehmung (1211) jedes Aufnahmekörpers (121) von zwei Seiten (1217, 1218) begrenzt ist, die von einer Unterkante (1216) begrenzt sind, welche die Hauptachse (x) der Ausnehmung (1211) bildet, die durch Drehung des Aufnahmekörpers (121)
a) vor Erreichen der Ladeposition parallel, und/oder
b) vor Erreichen der Prüfposition senkrecht, und/oder
c) vor Erreichen der Entnahmeposition parallel
zu dem den Aufnahmekörper (121) durchlaufenden Radius des Aufnahmeringe (12) ausgerichtet wird, sofern diese Ausrichtung nicht bereits vorliegt.

6. Vorrichtung (100) zur optischen Prüfung von Werkstücken (9) nach dem Verfahren (1) gemäss Anspruch 1, mit einer von einer Antriebseinheit (81) angetriebenen Transportvorrichtung (1), der von einer Ladevorrichtung (2) Werkstücken (9) zuführbar sind, die von der Transportvorrichtung (1) zu wenigstens einer Prüfposition, an der eine optische Prüfung durchführbar ist, und weiter zu wenigstens einer Entnahmeposition transportierbar sind, an der die geprüften Werkstücke (9) von einer Entnahmevorrichtung (4) selektiv entnehmbar sind, wobei auf der Transportvorrichtung (1) mehrere transparente Aufnahmekörper (121) vorgesehen sind, die je wenigstens eine Ausnehmung (1211) aufweisen, in die die Werkstücke (9) einzeln oder in Gruppen eingefügbar sind und durch die hindurch eine Prüfstrahlung (S) führbar ist, um die gehaltenen Werkstücke (9) abzubilden, **dadurch gekennzeichnet, dass** die Aufnahmekörper (121) auf einem Aufnahmering (12) fest montiert oder drehbar gelagert sind, über dem ein Synchronisationsring (11) mit Einlasstrichtern (111) montiert ist, wobei die Austrittsöffnung (1110) jedes Einlasstrichters (111) oberhalb der Ausnehmung (1211) eines zugeordneten Aufnahmekörpers (121) angeordnet ist.

7. Vorrichtung nach Anspruch 6, **dadurch gekennzeichnet, dass** wenigstens einer der Aufnahmekörper (121) ein einstückiges oder ein aus wenigstens zwei Prismen gebildetes, vorzugsweise gerades Prisma aus Glas oder Kunststoff ist, dessen Ausnehmung (1211) die Form eines Prismas mit drei oder mehreren Kanten aufweist.

8. Vorrichtung nach Anspruch 6 oder 7, **dadurch gekennzeichnet, dass** die entlang einer in sich geschlossenen, kreisförmigen oder teilweise linearen Transportbahn (B) geführten Aufnahmekörper (121) auf der drehbar gelagerten oder linear bewegten Transportvorrichtung (1), wie einem Rotor, einem Ring, einem Band oder einer Kette, fest montiert oder drehbar gelagert sind.

9. Vorrichtung nach Anspruch 8, **dadurch gekennzeichnet, dass** jeder Aufnahmekörper (121) von einer in der Transportvorrichtung (1) gelagerten Halterung (125) getragen ist, welche in einer Ebene oder im Raum zwischen wenigstens zwei Positionen drehbar und in diesen Positionen vorzugsweise fixierbar ist, so dass die Aufnahmekörper (121) an wenigstens einer Ladeposition, an der die Werkstücke (9) von der Ladevorrichtung (2) abgegeben werden, an wenigstens einer Prüfposition, an der die optische Vermessung der Werkstücke (9) erfolgt, sowie an wenigstens einer Entnahmeposition, an der die Werkstücke (9) von der Entnahmevorrichtung (4) selektiv entnommen werden, in eine definierte Lage drehbar sind.

10. Vorrichtung nach Anspruch 9, **dadurch gekennzeichnet, dass** die Halterung (125) ein mechanisches Steuerelement (1255) aufweist, welches mit wenigstens einer Steuerkurve (82), die entlang der Transportbahn (B) angeordnet ist, derart zusammenwirkt, dass die Halterung (125) in eine vorgesehene Lage drehbar und durch wenigstens ein mechanisches oder magnetisches Element (1261, 1262) fixierbar ist.

11. Vorrichtung nach einem der Ansprüche 6 - 10, **dadurch gekennzeichnet, dass** die Einlasstrichter (111) eine geneigte Frontseite (1111) und eine geneigte Rückseite (1112) aufweisen, welche die an die Ausnehmung (1211) des Aufnahmekörpers (121) und/oder an die Werkstücke (9) angepasste, vorzugsweise schlitzförmige Austrittsöffnung (1110) begrenzen.

12. Vorrichtung nach einem der Ansprüche 6 - 11, **dadurch gekennzeichnet, dass** der Aufnahmering (12) und der Synchronisationsring (11) durch Distanzelemente (113) in einem Abstand derart voneinander getrennt sind, dass ein Zwischenraum (1112) zwischen dem Aufnahmering (12) und dem Synchronisationsring (11) frei gehalten ist, in den zumindest der mit der Ausnehmung (1211) versehene Teil der Aufnahmekörper (121) hinein ragt und durch den hindurch die Prüfstrahlung (S) führbar ist.

13. Vorrichtung nach einem der Ansprüche 6 - 12, **dadurch gekennzeichnet, dass** die Transportvorrichtung (1) einen mit der Antriebswelle (810) der Antriebseinheit (81) verbunden Montageteller (14) aufweist, welcher den vorzugsweise mit einem Aussenflansch (13) versehen Aufnahmering (12) und den darüber liegenden Synchronisationsring (11) trägt, die vorzugsweise den gleichen Innendurchmesser und den gleichen Aussendurchmesser aufweisen.

14. Vorrichtung nach einem der Ansprüche 6 - 13, **dadurch gekennzeichnet,**
a) **dass** die Ladevorrichtung (2) ein Wendelförderer ist, der die Werkstücke (9) seriell an den Synchronisationsring (11) abgibt, und/oder
b) **dass** die Prüfvorrichtung (3) eine Strahlungsquelle (32), die in den Synchronisationsring (11) hinein ragt und die Prüfstrahlung (S) durch den Zwischenraum (1112) radial nach aussen abgibt, sowie eine Kamera umfasst, welche die aus dem Zwischenraum (1112) austretende Prüfstrahlung (S) erfasst; und/oder
c) **dass** die Entnahmevorrichtung (4) mit pneumatischen Mitteln versehen ist, mittels derer an jeder betreffenden Entnahmeposition Druckluft freisetzbar ist, um die als gut, schlecht oder undefiniert erkannten Werkstücke (9) von den Aufnahmekörpern (121) zu trennen.

## Claims

1. Method for the optical inspection of workpieces (9), which are delivered from a loading device (2) to a transport device (1) that is driven by a drive unit (81) and which are transported by the transport device (1) to an inspection device (3), which performs the optical inspection, and further to a discharge device (4), which selectively extracts the inspected workpieces (9) depending on the result of the inspection, wherein on the transport device (1) a plurality of transparent receiving bodies (121) are provided, each of the receiving bodies (121) comprising at least one recess (1211), into which the workpieces (9) are inserted individually or in groups, and wherein each receiving body (121) is exposed at an inspection position to inspection radiation (S), which is captured and analysed by the inspection device (3), **characterised in that** the receiving bodies (121) are firmly mounted or rotatably supported on a receiving ring (12), above which a synchronisation ring (11) with intake funnels (111) is mounted, wherein the workpieces (9) are cast by the loading device (2) into the intake funnels (111) and dropped from the intake funnels (111) each into the recess (1211) of a corresponding receiving body (121).

2. Method according to claim 1, **characterised in that** each receiving body (121) is held by a holding device (125), which is supported in the transport device (1) and which is turned in a plane or in space between at least two positions and is fixed in these positions, so that the receiving bodies (121) take a defined position on at least one loading position, on which the workpieces (9) are delivered from the loading device (2), on at least one inspection position, on which the optical measurement of the workpieces (9) is performed, and on at least one discharge position, on which the workpieces (9) are selectively removed by the discharge device (4).

3. Method according to claim 2, **characterised in that** the holding device (125) is magnetically fixed at each of the at least two positions.

4. Method according to claim 1, 2 or 3, **characterised in that** the workpieces (9) are continuously forwarded to the synchronisation ring (11) and that, without stopping the transport device, the inspection device (3) performs the optical inspection and/or the selective discharge of the workpieces (9) as soon as a marking element (15) is detected.

5. Method according to claim 3 or 4, **characterised in that** the recess (1121) of each receiving body (121) is limited by two sides (1217, 1218) that are limited by a lower edge (1216), which forms the main axis of the recess (1121), which by turning the receiving body (121) is aligned
a) in parallel before the loading position is reached, and/or
b) perpendicularly before the inspection position is reached, and/or
c) in parallel before the discharge position is reached,
with the radius of the receiving ring (12) that traverses the receiving body (121), if alignment is not already provided.

6. Apparatus (100) for the optical inspection of workpieces (9) operating according to the method of claim 1, with a transport device (1) driven by a drive unit (81), which transport device (1) can be supplied with workpieces (9) delivered by a loading device (2), which workpieces (9) are transportable by the transport device (1) to at least one inspection position, where an optical inspection is performed by an inspection device (3), and further to at least one discharge position, where the inspected workpieces (9) are selectively extractable by a discharge device (4), wherein on the transport device (1) a plurality of transparent receiving bodies (121) are provided, each of the receiving bodies (121) comprising at least one recess (1211), into which the workpieces (9) can be inserted individually or in groups, and wherein an inspection radiation (S) can be guided through each receiving body (121) in order to image the held workpieces (9), **characterised in that** the receiving bodies (121) are firmly mounted or rotatably supported on a receiving ring (12), above which a synchronisation ring (11) with intake funnels (111) is mounted, wherein the discharge opening (1110) of each intake funnel (111) is arranged above the recess (1211) of a corresponding receiving body (121).

7. Apparatus according to claim 6, **characterised in that** at least one of the receiving bodies (121) is a preferably straight prism, which consists of a single piece or is formed of at least two prisms and which is made from glass or plastic and whose recess (1211) comprises the form of a prism having three or more edges.

8. Apparatus according to claim 6 or 7, **characterised in that** the receiving bodies (121), which are guided along a closed circular or at least partially linear transport track (B), are firmly mounted or rotatably supported on the rotatably supported or linearly movable transport device (1), such as a rotor, a ring, a belt or a chain.

9. Apparatus according to claim 8, **characterised in that** each receiving body (121) is held by a holding device (125) that is supported in the transport device (1), and which holding device (125) is rotatable in a plane or in space between at least two positions and can preferably be fixed in these positions, so that the receiving bodies (121) can be turned into a defined position on at least one loading position, on which the workpieces (9) are delivered from the loading device (2), on at least one inspection position, on which the optical measurement of the workpieces (9) is performed, and on at least one discharge position, on which the workpieces (9) are selectively removed by the discharge device (4).

10. Apparatus according to claim 9, **characterised in that** the holding device (125) comprises a mechanical control element (1255), which engages in such a way with at least one control curve (82) arranged along the transport track (B) that the holding device (125) is rotatable into a defined position and is fixable by means of at least one mechanical or magnetic element (1261, 1262).

11. Apparatus according to one of the claims 6 to 10, **characterised in that** the intake funnels (111) comprise an inclined front side (1111) and an inclined back side (1112), which delimit the outlet opening (1110), which is preferably formed as a slit and which is adapted to the recess (1211) of the receiving bodies (121) and/or to the workpieces (9).

12. Apparatus according to one of the claims 6 to 11, **characterised in that** the receiving ring (12) and the synchronisation ring (11) are separated by distance elements (113) with a clearance in such a way that an interspace (1112) is kept free between the receiving ring (12) and the synchronisation ring (11), into which interspace (1112) at least the part of the receiving bodies (121) is projecting, which is provided with the recess (1211) and through which the inspection radiation (S) is guidable.

13. Apparatus according to one of the claims 6 to 12, **characterised in that** the transport device (1) comprises a mounting disk (14) that is connected to the drive shaft (810) of the drive unit (81) and that supports the receiving ring (12), which is preferably provided with an outer flange (13), and that supports the synchronisation ring (11) arranged above the receiving ring (12), which preferably comprise the same inner diameter and the same outer diameter.

14. Apparatus according to one of the claims 6 to 13, **characterised in**
a) **that** the loading device (2) is a helical conveyer, which delivers the workpieces (9) serially to the synchronisation ring (11), and/or
b) **that** the inspection device (3) comprises a light source 32, that extends into the synchronisation ring (11) and that emits inspection radiation (S) through the interspace (1112) radially towards the outside, as well as a camera, which captures the inspection radiation (S) that is exiting the interspace (1112), and/or
c) **that** the discharge device (4) is provided with pneumatic means, with which at each corresponding discharge position pressurised air can be set free in order to separate workpieces (9), which have been identified as good, bad or undefined, from the receiving bodies (121).

## Revendications

1. Procédé pour l'inspection optique de pièces usinées (9), qui sont délivrées par un dispositif de chargement (2) à un dispositif de transport (1) entraîné par une unité d'entraînement (81) qui les transporte à un dispositif d'inspection (3) qui effectue l'inspection optique et ensuite à un dispositif de prélèvement (4) qui prélève sélectivement les pièces usinées (9) inspectées en fonction des résultats de l'inspection, plusieurs corps transparents de réception (121) étant prévus sur le dispositif de transport (1), lesquels présentent au moins une cavité (1211) dans laquelle les pièces usinées (9) sont introduits individuellement ou en groupes et chaque corps de réception (121) étant exposé en position d'inspection à un rayonnement d'inspection (S) qui est détecté et analysé par le dispositif d'inspection (3), **caractérisé en ce que** les corps de réception (121) sont logés en rotation ou fixement sur un anneau de réception (12) par l'intermédiaire duquel est monté un anneau de synchronisation (11) avec des entonnoirs d'entrée (111), les pièces usinées (9) étant introduites par l'unité de chargement (2) dans les entonnoirs d'entrée (111) lesquelles tombent respectivement dans la cavité (1211) d'un corps de réception associé (121).

2. Procédé selon la revendication 1, **caractérisé en ce que** chaque corps de réception (121) est porté par une fixation (125) logée dans le dispositif de transport (1), laquelle est tournée dans un plan ou dans l'espace entre au moins deux positions et fixée dans ces positions de sorte que le corps de réception (121) prend une position définie dans au moins une position de charge à laquelle les pièces usinées (9) sont amenées à au moins une position d'inspection, à laquelle s'effectue la mesure optique des ainsi qu'à au moins une position de prélèvement à laquelle les pièces usinées (9) sont prélevées par le dispositif de prélèvement.

3. Procédé selon la revendication 2, **caractérisé en ce que** la fixation (125) est fixée magnétiquement dans chacune au moins des deux positions.

4. Procédé selon la revendication 1, 2, ou 3, **caractérisé en ce que** les pièces usinées (9) sont amenées en continu à l'anneau de synchronisation (11) et **en ce que** le dispositif d'inspection effectue, après la détection d'un élément de marquage (15), l'inspection optique et/ou le déchargement sélectif des pièces usinées (9) sans arrêter le dispositif de transport.

5. Procédé selon la revendication 3 ou 4, **caractérisé en ce que** la cavité (1211) de chaque corps de réception (121) est limitée par deux faces (1217, 1218), qui sont limitées par un bord inférieur (1216), qui forme l'axe principal (x) de la cavité (1211), qui est orienté par rotation du corps de réception (121)
a) avant d'atteindre la position de chargement parallèlement, et/ou
b) avant d'atteindre la position d'inspection, perpendiculairement, et/ou
c) avant d'atteindre la position de déchargement parallèlement
par rapport au rayon de l'anneau de réception (12), traversant le corps de réception (121), dans la mesure où cette orientation n'existe pas déjà.

6. Procédé pour l'inspection optique de pièces usinées (9), selon le procédé (1) conformément à la revendication 1, comprenant un dispositif de transport (1) entraîné par une unité d'entraînement (81), auquel sont amenées des pièces usinées (9) par un dispositif de chargement (2), lesquelles sont amenées par le dispositif de transport (1) à au moins une position d'inspection à laquelle une inspection optique est réalisable et à au moins une position de prélèvement à laquelle les pièces usinées (9) peuvent être prélevées sélectivement par un dispositif de prélèvement (4), plusieurs corps de réception (121) transparents étant prévus sur le dispositif de transport (1), lesquels présentent au moins une cavité (1211) dans laquelle sont introduites les pièces usinées (9) individuellement ou en groupe et qui est traversée par un rayon d'inspection (S) pour reproduire les pièces usinées (9) maintenues, **caractérisé en ce que** les corps de réception (121) sont logés en rotation ou fixement sur un anneau de réception (12) par l'intermédiaire duquel est monté un anneau de synchronisation (11) avec des entonnoirs d'entrée (111), l'ouverture de sortie (1110) de chaque entonnoir d'entrée (111) étant disposée au-dessus de la cavité (1211) d'un corps de réception associé (121).

7. Dispositif selon la revendication 6, **caractérisé en ce qu'**au moins l'un des corps de réception (121) est un prisme d'une seule pièce ou formé par au moins deux prismes, de préférence un prisme droit en verre ou en matière synthétique, dont la cavité (1211) présente la forme d'un prisme avec trois ou plusieurs bords.

8. Dispositif selon la revendication 6 ou 7, **caractérisé en ce que** les corps de réception (121) guidés le long d'une voie de transport (B) fermée partiellement de forme circulaire ou partiellement linéaire, sont montés sur le dispositif de transport (1) logé en rotation ou mobile linéairement, comme un rotor, un anneau, une bande ou une chaîne.

9. Dispositif selon la revendication 8, **caractérisé en ce que** chaque corps de réception (121) est porté par une fixation (125) logée dans le dispositif de transport (1), laquelle est tournée dans un plan ou dans l'espace entre au moins deux positions et, de préférence, fixée dans ces positions de sorte que le corps de réception (121) prend une position définie dans au moins une position de charge à laquelle les pièces usinées (9) sont amenées à au moins une position d'inspection, à laquelle s'effectue la mesure optique des pièces usinées (9) ainsi qu'à au moins une position de prélèvement à laquelle les pièces usinées (9) sont prélevées par le dispositif de prélèvement.

10. Dispositif selon la revendication 9, **caractérisé en ce que** la fixation (125) présente un élément de commande mécanique (1255), lequel coopère avec au moins une came de commande (82), qui est disposée le long de la voie de transport (B) de sorte que la fixation (125) peut tourner dans une position prévue et être fixé par au moins un élément magnétique ou mécanique (1261, 1262).

11. Dispositif selon l'une des revendications 6 à 10, **caractérisé en ce que** les entonnoirs d'entrée (111) présentent une face frontale inclinée (1111) et une face arrière inclinée (1112), lesquelles délimitent l'ouverture de sortie (1110) de préférence en forme de fente, et adaptée à l'évidement (1211) du corps de réception (121) et/ou aux pièces usinées (9).

12. Dispositif selon l'une des revendications 6 à 11, **caractérisé en ce que** l'anneau de réception (12) et l'anneau de synchronisation (11) sont séparés l'un de l'autre par des éléments distanceurs (113) à une distance de sorte qu'un espace intermédiaire (1112) entre l'anneau de réception (12) et l'anneau de synchronisation (119 est maintenu libre et dans lequel s'engage au moins la partie du corps de réception (121), qui est munie de la cavité (1211) et qui peut être traversée par le rayon d'inspection (S).

13. Dispositif selon l'une des revendications 6 à 12, **caractérisé en ce que** le dispositif de transport (1) présente un plateau de montage (14) relié à l'arbre d'entraînement (810) de l'unité d'entraînement (81), qui porte l'anneau de réception (12) muni de préférence d'une bride externe (3) et l'anneau de synchronisation (11) se trouvant au-dessus, qui présentent de préférence le même diamètre interne et le même diamètre externe.

14. Dispositif selon l'une des revendications 6 à 13, **caractérisé en ce que**
a) le dispositif de chargement (2) est un convoyeur hélicoïdale sans fin qui délivre les pièces usinées (9) en série à l'anneau de synchronisation, et/ou
b) le dispositif d'inspection (3) comprend une source de rayonnement (32), qui s'engage dans l'anneau de synchronisation (11) et émet le rayon d'inspection (8) à travers l'espace intermédiaire (1112) radialement vers l'extérieur, ainsi qu'une caméra, qui saisit le rayon d'inspection (S) sortant de l'espace intermédiaire (1112) ; et/ou
c) le dispositif de prélèvement (4) est muni de moyens pneumatiques, au moyen desquels de l'air comprimé peut être libéré à chaque position de prélèvement concernée, pour séparer des corps de réception (121) les pièces usinées (9) détectées comme bonnes, mauvaises ou non définies.
